# EUROPEAN PATENT SPECIFICATION

(11) **EP 4 213 358 B1**
(45) Date of publication and mention of the grant of the patent: **12.11.2025**
(21) Application number: 22856978.6
(22) Date of filing: 25.08.2022
(51) Int. Cl.: H02M 3/156, H02M 1/32, H02M 1/36, H02M 1/00

(54) **POWER CONVERSION CIRCUIT AND ELECTRONIC DEVICE**
LEISTUNGSUMWANDLUNGSSCHALTUNG UND ELEKTRONISCHE VORRICHTUNG
CIRCUIT DE CONVERSION D'ÉNERGIE ET DISPOSITIF ÉLECTRONIQUE

(30) Priority: 26.11.2021 CN 202111421896
(43) Date of publication of application: 19.07.2023
(73) Proprietor: Honor Device Co., Ltd., Shenzhen, Guangdong 518040 (CN)
(72) Inventor: WU, Mingjian, Shenzhen, Guangdong 518040 (CN)
(74) Representative: Maiwald GmbH
(86) International application number: PCT/CN2022/114773
(87) International publication number: WO 2023/093156

(56) References cited:
- EP-B1- 2 693 621
- CN-A- 104 953 837
- CN-A- 109 256 939
- CN-A- 113 394 983
- CN-Y- 2 912 099
- JP-A- 2011 210 026
- US-A1- 2012 194 157
- US-A1- 2017 310 214
- US-A1- 2018 026 537
- US-A1- 2019 252 982
- US-A1- 2021 203 346
- "Enpirion Power Datasheet EC7401QI 4-Phase PWM Controller with 8-Bit DAC Code", 14 March 2014 (2014-03-14), pages 1 - 44, XP055250229, Retrieved from the Internet <URL:https://www.altera.com/content/dam/altera-www/global/en_US/pdfs/literature/ds/ds-1045_ec7401qi.pdf> [retrieved on 20160215]

## Description

### TECHNICAL FIELD

This application relates to the field of power electronics technologies, and in particular, to a power conversion circuit and an electronic device.

### BACKGROUND

With widespread popularization of wearable devices, maximizing standby time of the wearable devices has become a key research direction. A quiescent current of a power converter chip is an important factor that affects standby duration, especially standby duration in a sleeping period. However, because the power converter chip needs to regulate an output voltage of the power converter chip, so that the output voltage stabilizes at a set configuration value, to further adapt to requirements of different load, even in the sleeping period. However, a quiescent current caused by this process is usually relatively high. Therefore, currently, a voltage regulation solution with a relatively low quiescent current needs to be provided urgently. The US 2019/0252982 A1 refers to a DC-DC converting controller. The US 2017/0310214 A1 refers to a reference voltage generation circuit and a DC-DC converter having the same. The US 2012/0194157 A1 refers to a switching regulator performing output voltage changing function. The EP 2 693 621 B 1 refers to a power supply apparatus, image forming apparatus, and integrated circuit. The US 2021/0203346 A1 refers to a pinstrap detection circuit.

### SUMMARY

In view of this, this application provides a power conversion circuit and an electronic device, to reduce a quiescent current caused by a voltage regulation process. The invention is set out in the appended set of claims.

### BRIEF DESCRIPTION OF DRAWINGS

To describe technical solutions in embodiments of this application or in the conventional technology more clearly, the following briefly describes the accompanying drawings needed for describing embodiments or the conventional technology. Apparently, the accompanying drawings in the following descriptions merely show embodiments of this application, and a person of ordinary skill in the art can still derive other drawings from provided accompanying drawings without creative efforts.
FIG. 1a, FIG. 1b, and FIG. 1c are schematic diagrams of three voltage regulation solutions of a power converter;
FIG. 2 is a schematic diagram of a structure of a power conversion circuit according to an embodiment of this application;
FIG. 3a, FIG. 3b, FIG. 3c, and FIG. 3d are schematic diagrams of four structures of resistor configuration according to an embodiment of this application;
FIG. 4a and FIG. 4b are signal waveform graphs of two voltage regulation processes of a power conversion circuits according to an embodiment of this application;
FIG. 5a, FIG. 5b, FIG. 5c, FIG. 6a, FIG. 6b, and FIG. 6c are schematic diagrams of other six structures of a power conversion circuit according to an embodiment of this application; and
FIG. 7 is a schematic diagram of a module structure of an electronic device according to an embodiment of this application.

### DESCRIPTION OF EMBODIMENTS

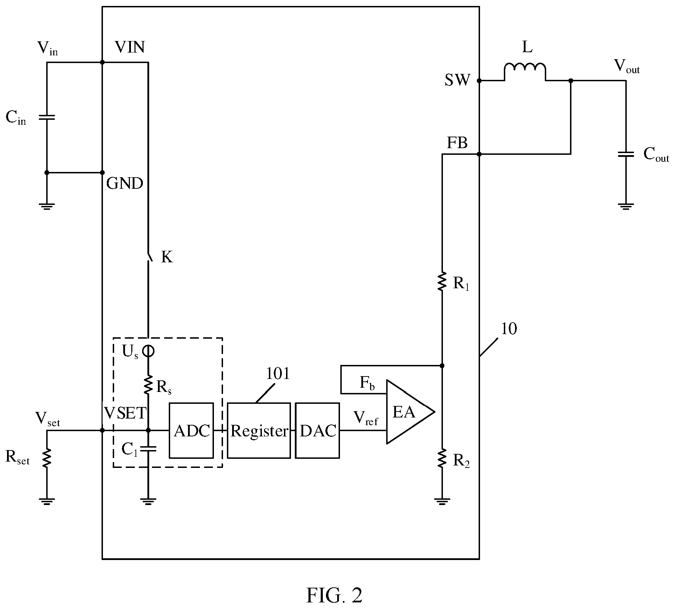

In the specification, claims, and accompanying drawings of this application, the terms "first", "second", "third", and the like are intended to distinguish between different objects but not to limit a particular order. It should be noted herein that the following embodiments of figures 2, 5b, 5c, 6a, 6b, 6c are merely comparative examples which do not fall into the scope of the amended claims.

In an embodiment of this application, the word such as "as an example" or "for example" is used to represent giving an example, an illustration, or a description. In embodiments of this application, any embodiment or design solution described as "for example" or "such as" shall not be explained as being more preferred or advantageous than other embodiments or design solutions. Specifically, use of the words "for example" and "such as" is intended to present a relevant concept in a specific way.

A power converter chip may be applied to different electronic devices, for example, a wearable device such as a smartwatch, a smart band, or a Bluetooth headset. Even if the power converter chip is applied to a same electronic device, the power converter chip may face different power supply requirements. To adapt to power supply requirements of different load, the chip needs to be capable of outputting a plurality of output voltages of different values, such as 0.7 V and 1.8 V Therefore, an output voltage of the chip needs to be set and regulated, so that the output voltage can stably provide a voltage value required by corresponding load.

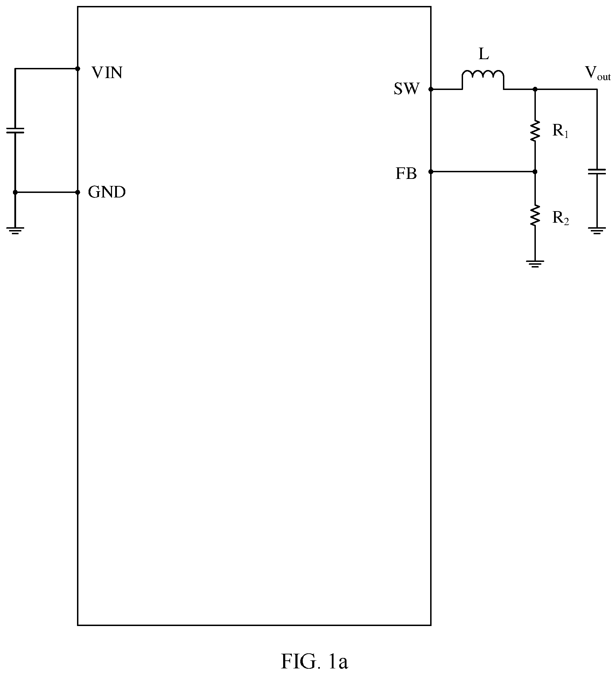

Currently, for output voltage regulation of the chip, if a voltage divider resistor voltage regulation solution shown in FIG. 1a is used, that is, voltage divider resistors R₁ and R₂ outside a chip (as shown in a block in the figure) are used to collect an output voltage Vₒᵤₜ for subsequent calculation and regulation by a processor of an electronic device, in actual application, selected resistance values of the voltage divider resistors R₁ and R₂ cannot be too large. A specific reason is that a connection between the voltage divider resistors R₁ and R₂ and the chip needs to be implemented by using corresponding wires, these wires inevitably lead to a parasitic capacitor and a parasitic inductor, and these parasitic components introduce interference in a coupling manner. As interference sources, internal resistances of these parasitic components are generally high. Therefore, a larger resistance value of the voltage divider resistor indicates a greater interference divided to the voltage divider resistor. In addition, because an external wire of the chip is usually random, parameters of these parasitic components are not controllable, and consequently, interference caused by these parasitic parameters is not controllable. Therefore, to reduce impact of these parasitic components on a voltage division result, the selected resistance values of the voltage divider resistors R₁ and R₂ cannot be too large, provided that impact that is of a voltage difference brought by interference and that is on a voltage division result can be ignored. A wearable device usually used output voltage Vₒᵤₜ =1.8 V is used as an example. The voltage divider resistors R₁ + R₂ are valued as 150 kΩ, and a current flowing on the voltage divider resistors is I_{(R1+R2)} = 1.8 V/150 kΩ = 12 uA. For a wearable device, 12 uA indicates that a quiescent current is excessively high. A VIN pin is a power supply end of the chip, a GND pin is configured to implement a grounding connection, a voltage output by an SW pin can generate the output voltage Vₒᵤₜ by using an external inductor L, and an FB pin is configured to collect the output voltage Vₒᵤₜ and feed back the voltage into the chip.

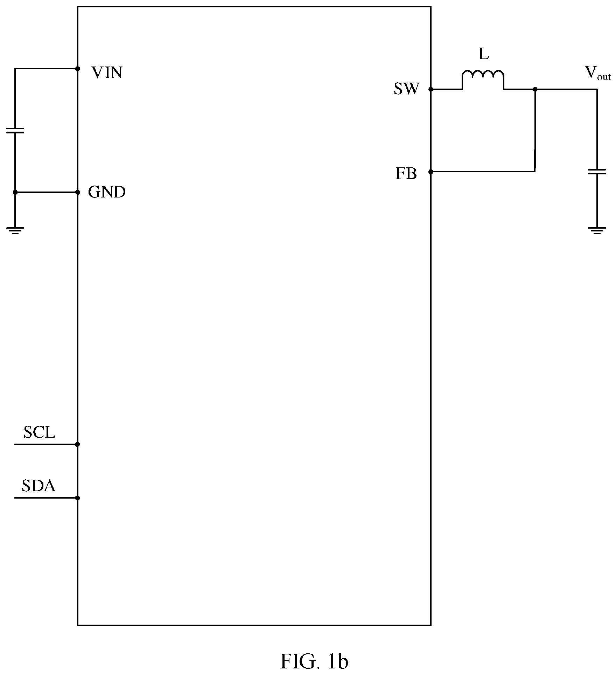

If an I²C communication function is used to implement voltage regulation, that is, as shown in FIG. 1b, the chip receives a control signal by using an SCL pin, and receives a data signal by using an SDA pin, to implement setting and regulation of the output voltage Vₒᵤₜ. Therefore, a corresponding electronic device can have the I²C communication function only after a processor of the corresponding electronic device is powered up. The SDA pin then is capable of receiving a corresponding data signal. Therefore, this solution is not applicable to a scenario in which communication is performed after powering up. For example, in a scenario in which the chip is used to supply power to a camera in an electronic device, for the chip whose initial default value of the output voltage Vₒᵤₜ is 1.8 V, when the chip faces a rated power supply voltage requirement of 1.2 V of the camera, the processor needs to transmit the data signal for the SDA pin of the chip by using the I²C communication function, so that the output voltage Vₒᵤₜ can be regulated to 1.2 V. However, because the initial default value of the output voltage Vₒᵤₜ of the chip after powering up is 1.8 V, in a time period from powering up of the processor to starting of communication, a power supply voltage received by the camera is 1.8 V, which is higher than a rated power supply voltage of the camera, and a camera burnout may be caused. Therefore, this solution is not applicable to the scenario in which communication is performed after powering up. In addition, in this solution, the I²C communication needs to be online in real time, to wait for the processor to generate the data signal and then transmit the data signal, so as to ensure that the SDA pin can receive the data signal. Therefore, a quiescent current of the solution is also usually higher than 2 uA.

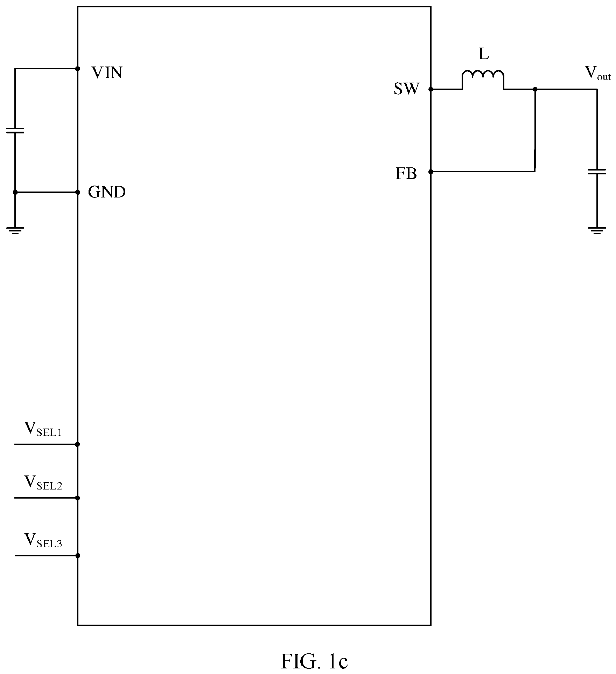

If a V_{SEL} true value table is used to implement voltage regulation, that is, as shown in FIG. 1c, the chip uses three set pins V_{SEL1}, V_{SEL2}, and V_{SEL3} to configure the output voltage Vₒᵤₜ, these three set pins can only provide a total of 2³=8 voltage values. Therefore, regulation levels of the output voltage Vₒᵤₜ of the chip are relatively small in quantity and inflexible. In addition, a larger quantity of set pins indicates a larger chip size.

Therefore, this application provides a power conversion circuit. The power conversion circuit can significantly reduce a quiescent current, and can further implement output voltages of more values and reduce a chip size, and therefore is applicable to a wearable device.

The power conversion circuit is disposed in an electronic device, and is controlled by a processor in the electronic device. The electronic device may be a wearable device such as a smartwatch, a smart band, or a Bluetooth headset, or may be a mobile terminal device such as a mobile phone or a tablet computer. For details, refer to the description in the last embodiment. The following uses a wearable device as an example for description.

As shown in FIG. 2, the power conversion circuit includes a power converter 10 and a configuration resistor Rₛₑₜ.

The power converter 10 is disposed in a power management module of the wearable device, and may specifically be a chip for implementing DC/DC conversion, such as a buck chip, a boost chip, or a buck-boost chip. The power converter 10 receives, by using an external input capacitor Cᵢₙ between a VIN pin and a GND pin, an input voltage Vᵢₙ provided by a battery or a charging management module in the wearable device, performs corresponding conversion on the input voltage Vᵢₙ, performs filtering on an inductor L connected to the outside of an SW pin, and generates an output voltage Vₒᵤₜ on an output capacitor Cₒᵤₜ between the other side of the inductor L and the ground. The output voltage Vₒᵤₜ is used to supply power to another component in the wearable device, such as a processor, a speaker, a memory, a motor, a flexible screen, a camera, and a wireless communication module. Internal components in different electronic devices may require different voltages, such as 0.7 V, 1.2 V, or 1.8 V. To enable a power conversion circuit of a same model to cover a plurality of different output voltages and adapt to different application scenarios, a corresponding voltage regulation function needs to be configured for the power conversion circuit.

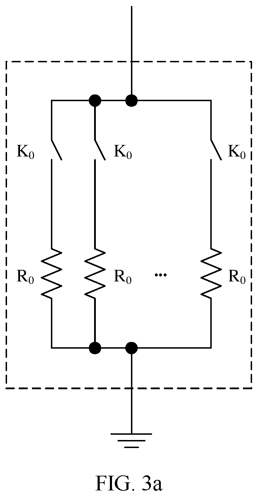

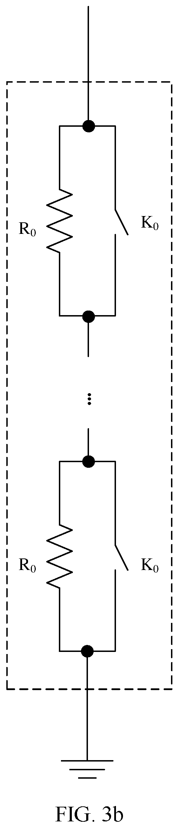

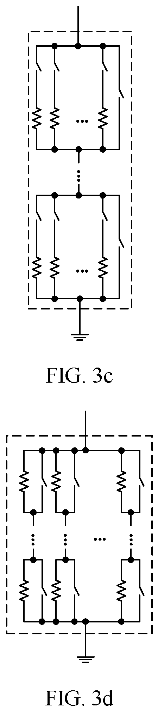

The configuration resistor Rₛₑₜ is disposed between a set input end VSET of the power converter 10 and a ground, and is configured to set a resistance value based on control of the processor. In a specific example, the configuration resistor Rₛₑₜ is implemented by using at least two resistors connected in parallel. Referring to FIG. 3a, each resistor R₀ is separately connected in series with a corresponding switch K₀ to form a series branch circuit. Then these series branch circuits are connected in parallel, and two ends formed after a parallel connection are used as two ends of the configuration resistor Rₛₑₜ. The processor changes a specific quantity of resistors R₀ connected inside the configuration resistor Rₛₑₜ by controlling turning on and turning off of each switch K₀, to further change an equivalent resistance value of the configuration resistor Rₛₑₜ. In actual application, resistance values of the resistors R₀ may be identical, or may be partially different, or even may be different from each other, which all fall within the protection scope of this application. Alternatively, the configuration resistor Rₛₑₜ may be implemented by using at least two resistors R₀ connected in series. In this case, each resistor R₀ is further connected in parallel to a corresponding switch K₀. A structure is shown in FIG. 3b. In this case, the switch K₀ in a closed state can bypass a resistance R₀ connected in parallel, to reduce a quantity of resistors put into a series connection relationship in the configuration resistor Rₛₑₜ. Or the switch K₀ in a disconnected state can put a resistor R₀ connected in parallel into the series connection relationship. This structure can also implement a change of an equivalent resistance value of the configuration resistor Rₛₑₜ, and resistance values of the resistors R₀ in this structure are not specifically limited. However, as in a structure shown in FIG. 3b, reference ground electrical level conversion of a control end needs to be performed on each switch K₀ other than a switch K₀ at a lowest end, to ensure that an on-off control electrical level of each switch K₀ is unified. Therefore, an implementation of this structure is more complex than the structure shown in FIG. 3a. In actual application, a combination of the structures shown in FIG. 3a and FIG. 3b may be further used to set a resistance value of the configuration resistor Rₛₑₜ, such as a structure shown in FIG. 3c with a series connection after a parallel connection, a structure shown in FIG. 3d with a parallel connection after a series connection, or a more complex structure with a series connection and a parallel connection. Any solution in which the processor puts all or some of the at least two resistors between two ends of the configuration resistor Rₛₑₜ by controlling turning on and turning off of at least one switch falls within the protection scope of this application.

In a specific example, as shown in FIG. 2, a switching transistor K, a voltage source Uₛ, a resistor Rₛ, a capacitor C₁, an ADC (Analog-to-Digital Converter, analog-to-digital converter), a register 101, a DAC (Digital-to-Analog Converter, digital-to-analog converter), and an EA (error amplifier, error amplifier) are disposed inside the power converter 10. The voltage source Uₛ is connected to a first end of the capacitor C₁, a set input end VSET, and an input end of the ADC after passing through the resistor Rₛ. An output end of the ADC is connected to a reference input end of the EA after sequentially passing through the register 101 and the DAC.

A VIN pin of the power converter 10 serves as a power supply end of the power converter 10, and may supply power to a component inside the power converter 10 by using the switching transistor K. For example, the VIN pin may supply power to the voltage source Uₛ and the ADC in a dashed-line box in FIG. 2. The switching transistor K may specifically be a MOS transistor, but is not limited thereto. After the power converter 10 is powered up, that is, after the VIN pin is powered up, the processor controls the switching transistor K to be closed, and the voltage source Uₛ and the ADC are powered up. The voltage source Uₛ can output a stable voltage. The resistor Rₛ and a configuration resistor Rₛₑₜ whose resistance value is set and that is outside the chip perform voltage division on the stable voltage. A voltage value Vₛₑₜ is obtained on the configuration resistor Rₛₑₜ. The voltage value Vₛₑₜ is a configuration voltage generated at a corresponding resistance value of the configuration resistor Rₛₑₜ for the set input end VSET (that is, a VSET pin). The configuration voltage Vₛₑₜ can be maintained in a stable state by using the capacitor C₁ inside the chip, then read and converted into a digital signal by the ADC, and locked in the register 101. The digital signal in the register 101 is then converted into an analog signal V_{ref} by using the DAC, V_{ref} = Vₛₑₜ. The analog signal V_{ref} is input to the reference input end of the EA and is used as a reference voltage of a control loop, to implement reference setting of the output voltage Vₒᵤₜ, so that the processor can control the power converter 10, and generate and output a corresponding output voltage Vₒᵤₜ based on the configuration voltage Vₛₑₜ.

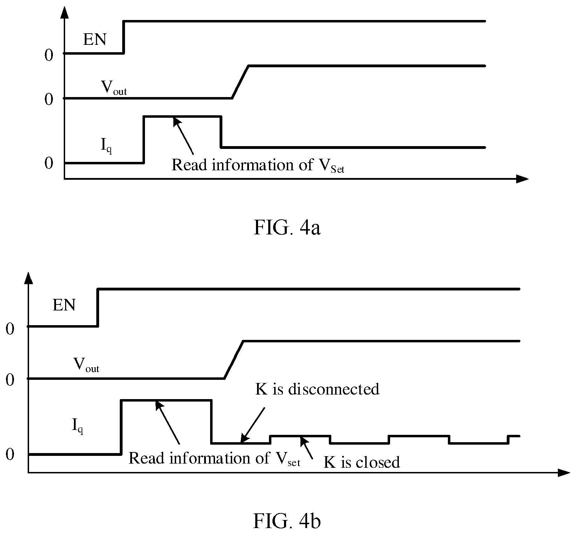

In addition, the output voltage Vₒᵤₜ is collected through voltage division collection by using grounded voltage divider resistors R₁ and R₂. A voltage value F_{b} on the grounded resistor R₂ is a collection value of the output voltage Vₒᵤₜ, and is input to a feedback input end of the EA as a feedback voltage F_{b} of the control loop, so that the processor reduces a difference between the feedback voltage F_{b} and the analog signal V_{ref}, to implement regulation of the output voltage Vₒᵤₜ. In addition, the voltage divider resistors R₁ and R₂ are disposed inside the power converter 10. One of reasons is that the voltage divider resistors are close to the EA, and the other reason is that connection wires of the voltage divider resistors may be disposed based on the voltage divider resistors, to control a parasitic parameter. Therefore, a resistance value of the voltage divider resistor may be set to be very large, and the resistance value may be set to be greater than a specific preset value in actual application, so that a leakage current is very low, and a quiescent current of the chip is further reduced. For a signal waveform graph of the chip, refer to FIG. 4a. A high EN indicates that the VIN pin is powered up, and I_{q} represents a current flowing into the VIN pin. The current is a quiescent current in a standby state of the power converter 10, and a segment of the current with a highest value represents a time period in which the ADC reads information of the configuration voltage Vₛₑₜ.

It can be learned from a waveform of I_{q} in FIG. 4a that, in this application, a quiescent current of the ADC is relatively high only when the ADC is powered up to read the information of the configuration voltage Vₛₑₜ, and an ultra-low quiescent current operation can be maintained in a subsequent steady-state phase. In addition, in this application, a voltage setting function can be implemented by using only one VSET pin, and the power converter 10 can be implemented by using a chip with a relatively small size. In addition, more equivalent resistance values that can be implemented by the configuration resistor Rₛₑₜ in this application indicate more regulation levels for the output voltage Vₒᵤₜ and more flexible regulation that can be implemented, so that a disadvantage of a voltage regulation range limitation of a conventional low power consumption power converter chips is overcome. Further, continuous voltage regulation can be implemented with high ADC accuracy. Further, in this application, regulation of the output voltage Vₒᵤₜ does not need to be performed by using the I²C communication, so that no I²C communication port is required, and the I²C communication does not need to be online in real time. When a resistance value of the configuration resistor Rₛₑₜ is set, a corresponding output voltage Vₒᵤₜ can be output after powering up. This can be applicable to a scenario in which communication is performed after powering up.

In another example, a low-precision resistor network may be used to replace the DAC in FIG. 2, and a principle for a structure setting of the resistor network is the same as that of the configuration resistor Rₛₑₜ. Refer to FIG. 3a to FIG. 3d. Details are not described herein. A voltage regulation step in this manner is affected by the structure setting of the resistor network. Therefore, a resistance value and a connection relationship of each component resistor inside the resistor network may be adjusted adaptively in actual application.

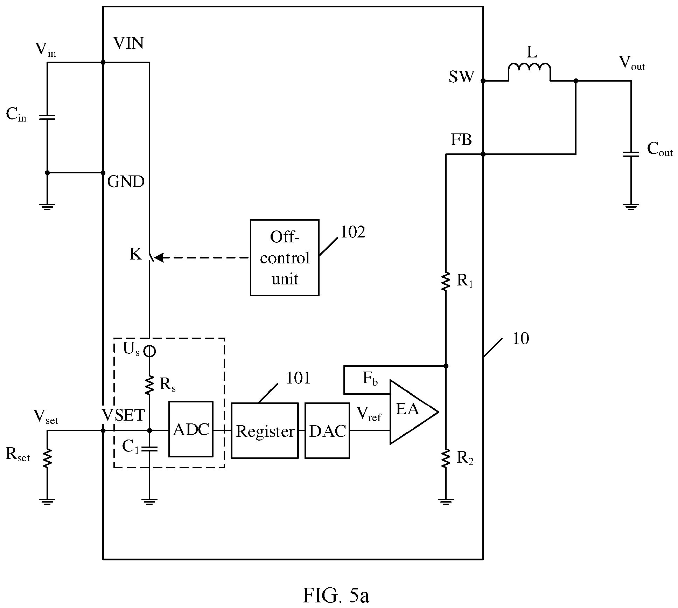

Based on that the voltage divider resistors R₁ and R₂ with high resistances can reduce a quiescent current, additionally, because the configuration voltage Vₛₑₜ is converted into the digital signal by the ADC and is stored in the register 101, and the digital signal stored in the register 101 is converted into the analog signal V_{ref} by the ADC, that is, only analog-to-digital conversion, storing, and digital-to-analog conversion are performed in a process from Vₛₑₜ to V_{ref}, there is V_{ref} = Vₛₑₜ. Therefore, after the DAC converts the digital signal in the register 101 into the analog signal V_{ref}, even if the switching transistor K is controlled to be disconnected and the voltage source Uₛ and the ADC are powered off, the register 101 may continue to provide the analog signal V_{ref} by using the DAC. This ensures that the reference input end of the EA can continuously receive the reference voltage of the control loop, and the power converter 10 can still generate and output the corresponding output voltage Vₒᵤₜ based on the configuration voltage Vₛₑₜ. In this case, because the voltage source Uₛ and the ADC are powered off, power consumption of the voltage source Uₛ and the ADC can be further saved, so that the quiescent current I_{q} can be further reduced on the basis of FIG. 4a, and as shown in FIG. 4b, the current is further significantly reduced. A specific example is as follows: An off-control unit 102 shown in FIG. 5a indirectly controls periodical turning on and turning off of the switching transistor K by using the processor. The off-control unit 102 may specifically be an RC timer, and may periodically turn on and turn off the switching transistor K by setting a specific duration, such as 10 ms. In this way, a resistance value of the configuration resistor Rₛₑₜ can be adjusted at any time, and the VIN pin does not need to be powered off during a running process of the chip. The digital signal stored in the register 101 is changed when the voltage source Uₛ and the ADC are powered up next time by using a storage function of the register 101, so that a register value updating function without powering off of the chip is implemented, then the analog signal V_{ref} output by the DAC is changed, regulation of the output voltage Vₒᵤₜ after powering up is implemented. In this case, a magnitude of the quiescent current I_{q} changes periodically when the switching transistor K is turned on and turned off. As shown in FIG. 4b, when the switching transistor K is closed, the voltage source Uₛ and the ADC have corresponding power consumption, and therefore a value of the quiescent current I_{q} in FIG. 4b is the same as that in the steady-state phase in FIG. 4a. When the switching transistor K is disconnected, the quiescent current I_{q} can be further reduced.

In actual application, if a clock is disposed in the power converter 10, the off-control unit 102 may also be a counter that cooperates with a clock reference signal, and the foregoing function can also be implemented. Details are not described again.

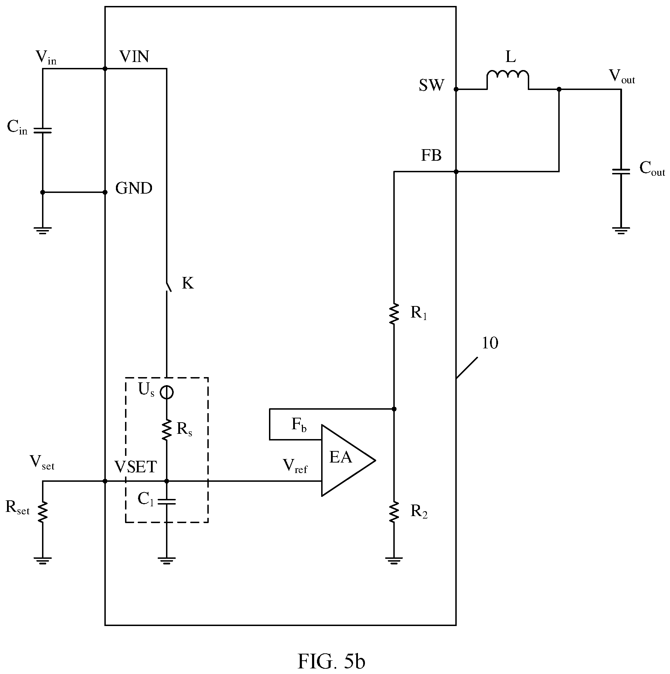

As shown in FIG. 5b, the VSET pin is inside the power converter 10, and is directly connected to the first end of the capacitor C₁ and the reference input end of the EA. This structure can also produce an effect shown in FIG. 4a, that is, an ultra-low quiescent current operation can be maintained in the steady-state phase. However, because a periodic turning off function brought by the off-control unit 102 and the storage function brought by the register 101 are omitted, this structure no longer has the register value updating function without powering off brought by a structure shown in FIG. 5a. In this case, the switching transistor K may be reserved. After the VIN pin is powered up, the switching transistor K is controlled by the processor and kept closed, and after the power converter 10 is normally powered off, appropriate delayed turning off may be selected, to implement voltage leakage on the input capacitor Cᵢₙ, or a direct turning off may be selected. Certainly, for cases shown in FIG. 2, FIG. 5a, and FIG. 5b, the switching transistor K may also be selectively omitted. In this case, power supply for a component in a dashed-line box in each figure is performed when the VIN pin is powered up.

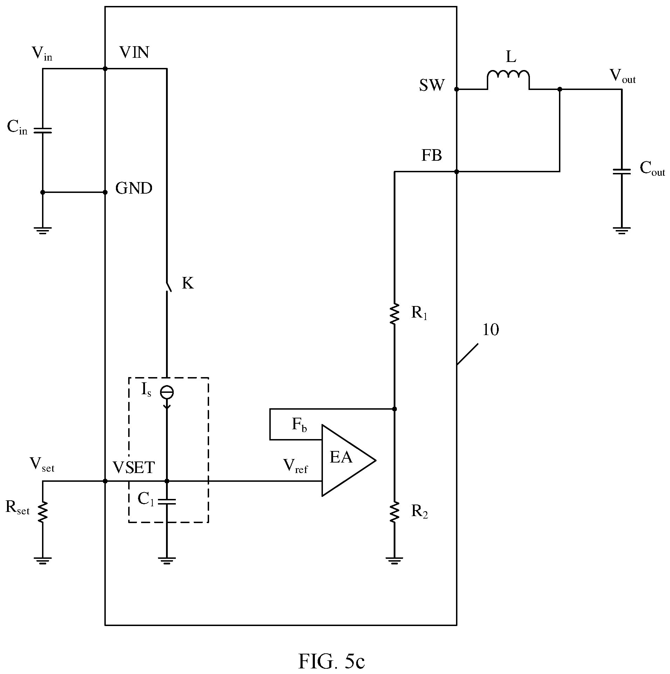

In addition, in the power converter 10, a current source Iₛ may be used to replace the voltage source Uₛ and a resistor Rₛ. A structure is shown in FIG. 5c. In this case, a value of the configuration voltage Vₛₑₜ and a resistance value of the configuration resistor Rₛₑₜ change in a constant positive proportional relationship. In addition, FIG. 5c shows a transformation of the structure shown in FIG. 5b. In actual application, the voltage source Uₛ and the resistor Rₛ in FIG. 2 and FIG. 5a may also be replaced by the current source Iₛ. Illustrations are not provided one by one.

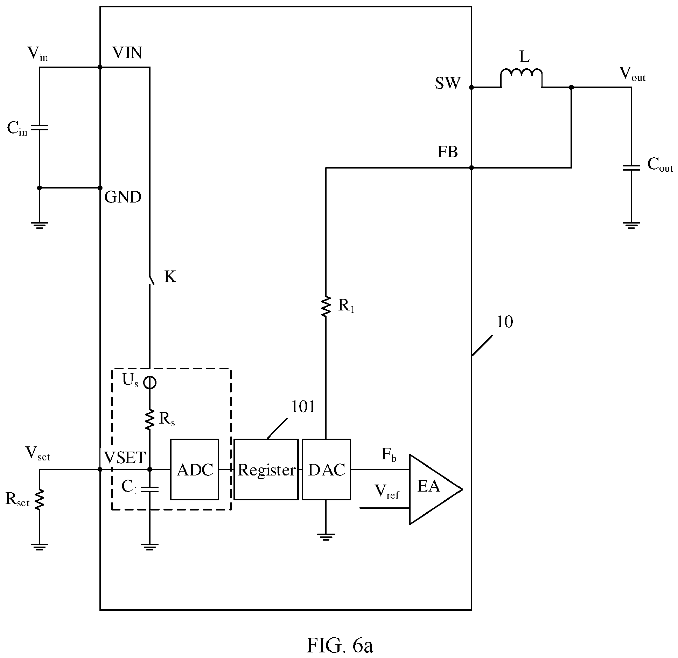

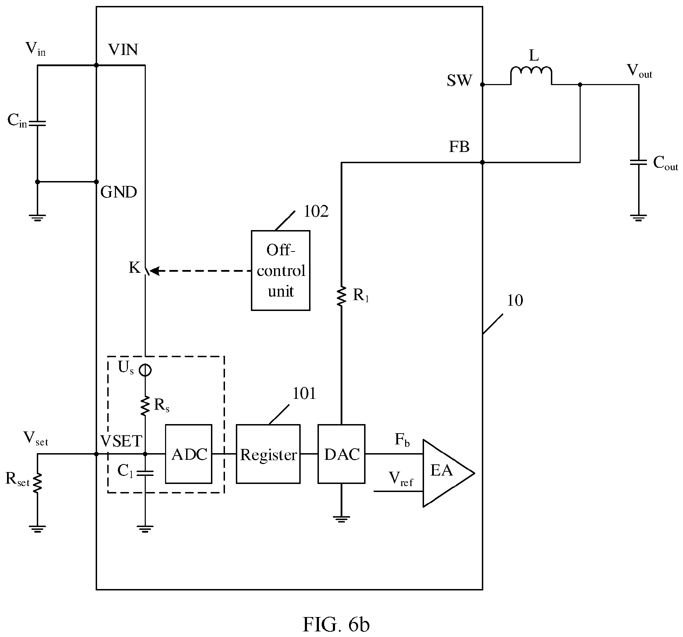

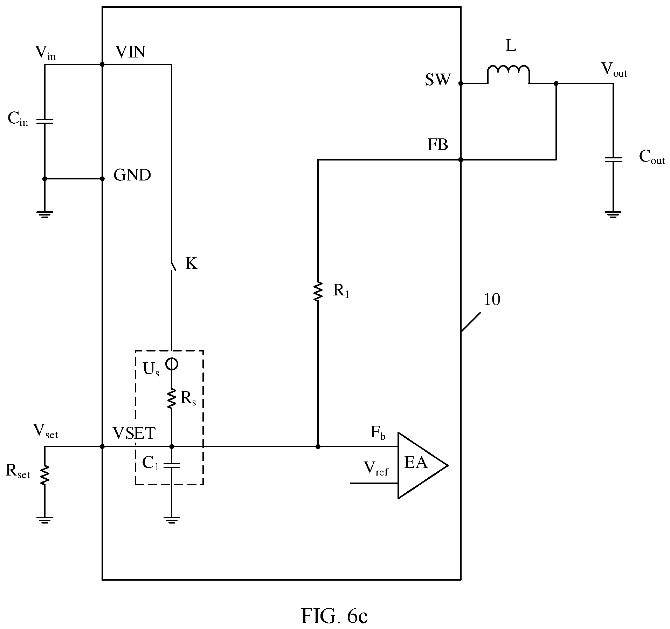

For the foregoing various structures in the power converter 10, a change of a received signal may be further performed on two inputs of the EA to obtain a corresponding transformation structure. Specifically, the reference input end of the EA is changed to receive a fixed reference voltage V_{ref}, and a received signal of a feedback voltage F_{b} of the feedback input end of the EA is adjusted in the foregoing corresponding form. After the foregoing change of the EA input end is performed on a structure shown in FIG. 2, an obtained transformation structure diagram is shown in FIG. 6a; after the foregoing change of the EA input end is performed on the structure shown in FIG. 5a, an obtained transformation structure diagram is shown in FIG. 6b; after the foregoing change of the EA input end is performed on the structure shown in FIG. 5b, an obtained transformation structure diagram is shown in FIG. 6c; and a state of a current source corresponding to FIG. 5c is not shown by a diagram. All the transformation structures are comparative examples which do not fall into the scope of the amended claims. In this solution, regulation of the output voltage Vₒᵤₜ is still implemented by adjusting a resistance value of the configuration resistor Rₛₑₜ. A specific regulation principle is similar to the foregoing content, and details are not described again.

Another embodiment of this application further provides an electronic device. The electronic device may be a mobile terminal device such as a mobile phone, a portable android device (portable android device, PAD), a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), and a wearable device. The wearable device includes, but is not limited to, a smartwatch, a smart band, a Bluetooth headset, and the like. A form of the electronic device is not specifically limited in this embodiment of this application.

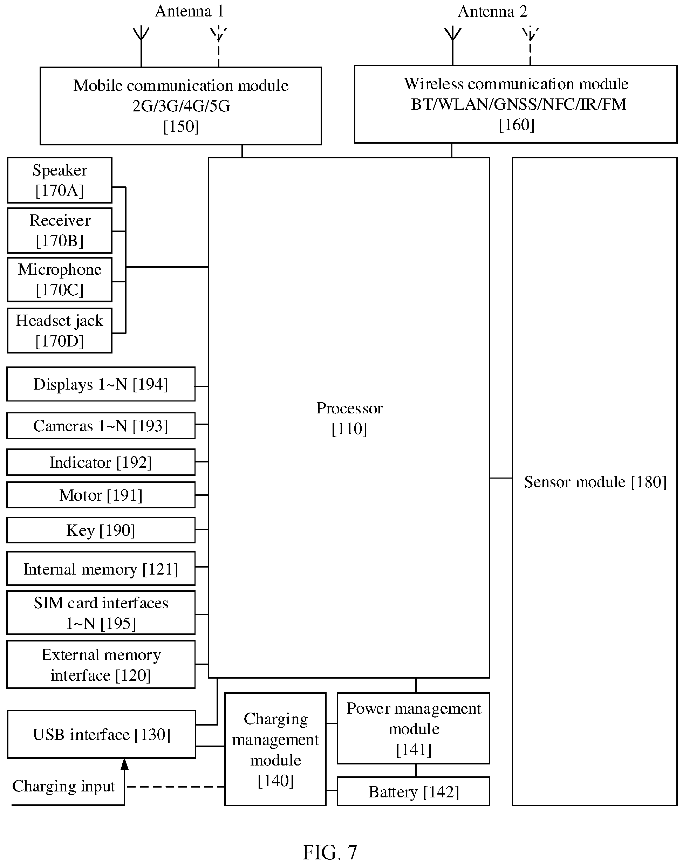

Referring to FIG. 7, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, a micro motor 191A, an indicator 192, a camera 193, a display 194 (a flexible display), and a SIM card interface 195. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure illustrated in this embodiment of this application does not constitute a specific limitation to the electronic device. In some other embodiments of this application, the electronic device may further include more or fewer components than those shown in the figure, or may combine some components, or may split some components, or may have different component arrangements. The illustrated components may be implemented by using hardware, software, or a combination of software and hardware. For example, components such as the headset jack 170D, the sensor module 180, the micro motor 191A, the camera 193, the display 194 (the flexible display), and the SIM card interface 195 do not need to be disposed in a Bluetooth headset, and the components may be determined based on a specific application environment of the device, which all fall within the protection scope of this application.

The USB interface 130 is an interface compliant with USB standards and specifications, and may specifically be a mini USB interface, a micro USB interface, a USB type C interface, or the like. The USB interface 130 may be configured to connect a charger to charge the electronic device, may be configured to transmit data between the electronic device and a peripheral device, and may be further configured to connect a headset to play audio by using the headset. In addition, the interface may be further configured to connect to another electronic device, such as an AR device.

The charging management module 140 is configured to receive a charging input from an external charger. While charging the battery 142, the charging management module 140 may further supply power to the electronic device by using the power management module 141. The power management module 141 may include one or more power conversion circuits provided in the foregoing embodiments, and is configured to connect the battery 142, the charging management module 140, and the processor 110. The power management module 141 receives an input of the battery 142 and/or an input of the charging management module 140, and supplies power to the processor 110, the internal memory 121, the speaker 170A, the external memory, the motor 191, the flexible display 194, the camera 193, the wireless communication module 160, and the like by using a corresponding power conversion circuit. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

The processor 110 may be an SoC (System-on-a-Chip, system-on-a-chip) in a device such as a mobile phone or a smartwatch, or a central processing unit in a device such as a tablet computer or a notebook computer, or may be an MCU (Microcontroller Unit, microcontroller unit) or the like. The processor 110 may specifically include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller can generate an operation control signal based on instruction operation codes and a timing signal, and complete the control of fetching and executing instructions.

The processor 110 may be further provided with a memory for storing instructions and data. In some embodiments, the memory in the processor 110 is a cache. The memory can store an instruction or data that the processor 110 has just used or used cyclically. If the processor 110 needs to reuse the instruction or the data, the instruction or the data may be directly invoked from the memory. Repeated access is avoided, and a waiting time of the processor 110 is reduced, thereby improving system efficiency.

In some embodiments, the processor 110 may include one or more interfaces. The interface may include an inter-integrated circuit (inter-integrated circuit, I²C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and the like.

Functions that can be implemented by another module in the electronic device are not described herein again.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A power conversion circuit, comprising: a power converter (10) and a configuration resistor, wherein:
the configuration resistor (Rset) is disposed between a set input end of the power converter (10) and a ground, having a resistance value which is controllable, and the configuration resistor (Rset) is configured to generate a configuration voltage (VSET) for the set input end according to the set resistance value of the configuration resistor (Rset);
the power converter (10) is configured to generate and to output a corresponding output voltage based on the configuration voltage; and
a voltage divider resistor that is configured to collect the output voltage that is disposed in the power converter (10), and a resistance value of the voltage divider resistor is greater than a preset value,
wherein the power converter (10) comprises a voltage source (Us), capacitor (C1), and an error amplifier (EA);
the voltage source (Us) is configured to be powered by a power supply end (VIN) of the power converter (10);
the voltage source (Us) is connected to a first end of the capacitor (C1) by resistor (Rs);
the first end of the capacitor (C1) is further connected to the set input end; and
a second end of the capacitor (C1) is grounded wherein in the power converter (10), an analog-to-digital converter (ADC), a register (101), and a digital-to-analog converter (DAC) are further disposed between the first end of the capacitor (C1) and a corresponding input end of the error amplifier (EA);
the analog-to-digital converter (ADC) is configured to be powered by the power supply end (VIN), and is configured to convert the configuration voltage into a digital signal;
the register (101) is configured to store the digital signal; and
the digital-to-analog converter (DAC) is configured to convert the digital signal into an analog signal and output the analog signal to the corresponding input end of the error amplifier, wherein a voltage value on a grounded resistor (R2) of the voltage divider resistor is a collection value of the output voltage, and is input to a feedback input end of the error amplifier as a feedback voltage of a control loop, wherein the control loop comprises the analog signal that is input to a reference input end of the error amplifier as a reference voltage of the control loop,
wherein the power supply end (VIN) is configured to supply power to the voltage source (Us) and to the analog/digital converter (ADC) through a switching transistor (K),
wherein the power converter (10) further comprises an off-control unit 102), configured to control periodical turning on and turning off of the switching transistor (K),
wherein the off-control unit (102) is an RC timer, or a counter configured to be operated by a clock reference signal from a clock disposed in the power converter (102).

2. The power conversion circuit according to claim 1, wherein the configuration resistor comprises at least two resistors and at least one switch; and
the at least one switch is configured to put all or some of the at least two resistors between two ends of the configuration resistor based on received on-off control.

3. The power conversion circuit according to claim 2, wherein in the configuration resistor, each resistor is separately connected in series with a corresponding switch to form a series branch circuit, series branch circuits are connected in parallel, and two ends formed after a parallel connection are used as two ends of the configuration resistor.

4. An electronic device, comprising: a processor (110), a battery (142), a charging management module (140), and the power conversion circuit according to any one of claims 1 to 3, wherein:
the charging management module (140) and the power conversion circuit are separately controlled by the processor;
the charging management module (140) is configured to charge the battery (142); and
the power conversion circuit receives power supplied by the battery (142) or the charging management module (140).

## Patentansprüche

1. Eine Leistungsumwandlungsschaltung, umfassend: einen Leistungswandler (10) und einen Konfigurationswiderstand, wobei:
der Konfigurationswiderstand (Rset) zwischen einem Setzeingang des Leistungswandlers (10) und Masse angeordnet ist, einen steuerbaren Widerstandswert aufweist und der Konfigurationswiderstand (Rset) dazu eingerichtet ist, eine Konfigurationsspannung (VSET) für den Setzeingang entsprechend dem eingestellten Widerstandswert des Konfigurationswiderstands (Rset) zu erzeugen;
der Leistungswandler (10) dazu ausgelegt ist, auf Basis der Konfigurationsspannung eine entsprechende Ausgangsspannung zu erzeugen und auszugeben; und
ein Spannungsteilerwiderstand, der dazu ausgelegt ist, die Ausgangsspannung zu erfassen, der im Leistungswandler (10) angeordnet ist und dessen Widerstandswert größer als ein voreingestellter Wert ist,
wobei der Leistungswandler (10) eine Spannungsquelle (Us), einen Kondensator (C1) und einen Fehlerverstärker (EA) umfasst;
die Spannungsquelle (Us) dazu ausgelegt ist, von einem Versorgungseingang (VIN) des Leistungswandlers (10) gespeist zu werden;
die Spannungsquelle (Us) ist über einen Widerstand (Rs) mit einem ersten Ende des Kondensators (C1) verbunden;
das erste Ende des Kondensators (C1) ist weiterhin mit dem Setzeingang verbunden; und
ein zweites Ende des Kondensators (C1) ist geerdet,
wobei im Leistungswandler (10) ein Analog-Digital-Wandler (ADC), ein Register (101) und ein Digital-Analog-Wandler (DAC) zwischen dem ersten Ende des Kondensators (C1) und einem entsprechenden Eingang des Fehlerverstärkers (EA) angeordnet sind;
der Analog-Digital-Wandler (ADC) dazu ausgelegt ist, vom Versorgungseingang (VIN) gespeist zu werden und die Konfigurationsspannung in ein Digitalsignal zu wandeln;
das Register (101) ist dazu eingerichtet, das Digitalsignal zu speichern; und
der Digital-Analog-Wandler (DAC) ist dazu ausgelegt, das Digitalsignal in ein Analogsignal umzuwandeln und dieses Analogsignal an den entsprechenden Eingang des Fehlerverstärkers auszugeben, wobei ein Spannungswert an einem auf Masse liegenden Widerstand (R2) des Spannungsteilerwiderstands ein Erfassungswert der Ausgangsspannung ist und als Rückkopplungsspannung einer Regelkreisschleife an einen Rückkopplungseingang des Fehlerverstärkers angelegt wird, wobei der Regelkreis das als Referenzspannung der Regelkreisschleife an einen Referenzeingang des Fehlerverstärkers angelegte Analogsignal umfasst,
wobei der Versorgungseingang (VIN) dazu ausgelegt ist, die Spannungsquelle (Us) und den Analog/Digital-Wandler (ADC) über einen Schalttransistor (K) mit Strom zu versorgen,
wobei der Stromwandler (10) ferner eine Abschaltsteuereinheit (102) umfasst, die dazu eingerichtet ist, das periodische Einschalten und Ausschalten des Schalttransistors (K) zu steuern,
wobei die Abschaltsteuereinheit (102) ein RC-Timer oder ein Zähler ist, der so konfiguriert ist, dass er von einem Taktreferenzsignal einer im Stromwandler (102) angeordneten Uhr betrieben wird.

2. Stromwandlerschaltung gemäß Anspruch 1, wobei der Konfigurationswiderstand mindestens zwei Widerstände und mindestens einen Schalter umfasst; und
wobei der mindestens eine Schalter konfiguriert ist, alle oder einige der mindestens zwei Widerstände basierend auf empfangener Ein-/Ausschaltsteuerung zwischen die beiden Enden des Konfigurationswiderstands zu schalten.

3. Stromwandlerschaltung gemäß Anspruch 2, wobei im Konfigurationswiderstand jeder Widerstand einzeln in Reihe mit einem entsprechenden Schalter verbunden ist, um einen Serienzweigkreis zu bilden, die Serienzweigkreise parallel geschaltet sind und die nach der Parallelschaltung gebildeten beiden Enden als die beiden Enden des Konfigurationswiderstands verwendet werden.

4. Elektronisches Gerät, umfassend: einen Prozessor (110), eine Batterie (142), ein Lademanagementmodul (140) und die Stromwandlerschaltung gemäß einem der Ansprüche 1 bis 3, wobei:
das Lademanagementmodul (140) und die Stromwandlerschaltung werden jeweils separat vom Prozessor gesteuert;
das Lademanagementmodul (140) ist dazu eingerichtet, die Batterie (142) zu laden; und
die Stromwandlerschaltung erhält Energie, die von der Batterie (142) oder dem Lademanagementmodul (140) bereitgestellt wird.

## Revendications

1. Un circuit de conversion de puissance, comprenant : un convertisseur de puissance (10) et une résistance de configuration, dans lequel :
la résistance de configuration (Rest) est disposée entre une borne d'entrée de réglage du convertisseur de puissance (10) et la masse, ayant une valeur de résistance qui est contrôlable, et la résistance de configuration (Rest) est conçue pour générer une tension de configuration (VSET) pour la borne d'entrée de réglage selon la valeur de résistance réglée de la résistance de configuration (Rset) ;
le convertisseur de puissance (10) est conçu pour générer et sortir une tension de sortie correspondante basée sur la tension de configuration ; et
une résistance de diviseur de tension conçue pour mesurer la tension de sortie et disposée dans le convertisseur de puissance (10), la valeur de résistance de ladite résistance de diviseur de tension étant supérieure à une valeur prédéfinie,
dans lequel le convertisseur de puissance (10) comprend une source de tension (Us), un condensateur (C1) et un amplificateur d'erreur (EA) ;
la source de tension (Us) est conçue pour être alimentée par une borne d'alimentation électrique (VIN) du convertisseur de puissance (10) ;
la source de tension (Us) est reliée à une première extrémité du condensateur (C1) par une résistance (Rs) ;
la première extrémité du condensateur (C1) est en outre reliée à la borne d'entrée de réglage ; et
une seconde extrémité du condensateur (C1) est reliée à la masse,
dans lequel, dans le convertisseur de puissance (10), un convertisseur analogique-numérique (ADC), une registre (101) et un convertisseur numérique-analogique (DAC) sont en outre disposés entre la première extrémité du condensateur (C1) et l'extrémité d'entrée correspondante de l'amplificateur d'erreur (EA) ;
le convertisseur analogique-numérique (ADC) est conçu pour être alimenté par la borne d'alimentation électrique (VIN), et pour convertir la tension de configuration en un signal numérique ;
le registre (101) est conçu pour stocker le signal numérique ; et
le convertisseur numérique-analogique (DAC) est conçu pour convertir le signal numérique en un signal analogique et fournir ledit signal analogique à l'extrémité d'entrée correspondante de l'amplificateur d'erreur, où une valeur de tension sur une résistance mise à la masse (R2) de la résistance de diviseur de tension est une valeur de mesure de la tension de sortie, et elle est entrée à une extrémité d'entrée de rétroaction de l'amplificateur d'erreur comme tension de rétroaction d'une boucle de contrôle, dans laquelle la boucle de contrôle comprend le signal analogique qui entre à une borne d'entrée de référence de l'amplificateur d'erreur comme tension de référence de ladite boucle de contrôle,
dans lequel la borne d'alimentation électrique (VIN) est conçue pour fournir l'alimentation à la source de tension (Us), ainsi qu'au convertisseur analogique/numérique (ADC) via un transistor de commutation (K),
où le convertisseur de puissance (10) comprend en outre une unité de contrôle d'arrêt (102), configurée pour contrôler l'activation et la désactivation périodiques du transistor de commutation (K),
où l'unité de contrôle d'arrêt (102) est un minuteur RC, ou un compteur conçu pour fonctionner grâce à un signal d'horloge de référence provenant d'une horloge disposée dans le convertisseur de puissance (102).

2. Circuit de conversion de puissance selon la revendication 1, dans lequel la résistance de configuration comprend au moins deux résistances et au moins un commutateur ; et
le ou les commutateurs sont conçus pour placer tout ou partie des au moins deux résistances entre les deux extrémités de la résistance de configuration en fonction du contrôle marche/arrêt reçu.

3. Circuit de conversion de puissance selon la revendication 2, dans lequel, dans la résistance de configuration, chaque résistance est connectée individuellement en série avec un commutateur correspondant pour former un circuit de branchement en série, les circuits de branchement en série étant connectés en parallèle, et les deux extrémités formées après la connexion en parallèle étant utilisées comme les deux extrémités de la résistance de configuration.

4. Dispositif électronique, comprenant : un processeur (110), une batterie (142), un module de gestion de la charge (140) et le circuit de conversion de puissance selon l'une quelconque des revendications 1 à 3, dans lequel :
le module de gestion de la charge (140) et le circuit de conversion de puissance sont commandés séparément par le processeur ;
le module de gestion de la charge (140) est conçu pour charger la batterie (142) ; et
le circuit de conversion de puissance reçoit l'énergie fournie par la batterie (142) ou le module de gestion de la charge (140).
